# EUROPEAN PATENT SPECIFICATION

(11) **EP 4 525 186 B1**
(45) Date of publication and mention of the grant of the patent: **22.07.2026**
(21) Application number: 23876627.3
(22) Date of filing: 08.10.2023
(51) Int. Cl.: H01M 50/209, H01M 50/503, H01M 50/507, H01M 50/593

(54) **HARNESS ISOLATION BOARDS AND BATTERY MODULES**
KABELBAUMISOLATIONSPLATTEN UND BATTERIEMODULE
CARTES D'ISOLATION DE FAISCEAU ET MODULES DE BATTERIE

(30) Priority: 10.10.2022 CN 202211232827
(43) Date of publication of application: 19.03.2025
(73) Proprietor: Hithium Tech HK Limited, Hong Kong (HK)
(72) Inventor: DAI, Shula, Xiamen, Fujian 361100 (CN)
(74) Representative: Santarelli
(86) International application number: PCT/CN2023/123439
(87) International publication number: WO 2024/078425

(56) References cited:
- EP-A1- 3 783 166
- WO-A1-2020/177609
- CN-A- 110 767 865
- CN-A- 115 411 461
- CN-U- 206 432 298
- CN-U- 206 947 422
- CN-U- 207 818 716
- CN-U- 210 224 149
- CN-U- 210 744 017
- CN-U- 216 928 826
- CN-U- 217 507 569
- GB-A- 2 524 353
- US-A1- 2012 125 870

## Description

This application claims priority to and the benefit of Chinese Patent Application No. 202211232827.6, filed October 10, 2022 to China National Intellectual Property Administration (CNIPA), and entitled "HARNESS ISOLATION PLATE AND BATTERY MODULE".

### TECHNICAL FIELD

The disclosure relates to the technical field of energy storage devices, and in particular to a harness isolation plate and a battery module.

### BACKGROUND

A battery module includes a harness isolation plate and a battery cell group. The harness isolation plate is integrally formed by a mold, and the size of the integrally-formed harness isolation plate is close to the size of the battery module. As the requirements for the energy density of the battery module increase, the size of the battery module also increases, which in turn increases the size of the harness isolation plate. To adapt to battery modules with different series configuration, harness isolation plates of different sizes need to be designed and molded separately, leading to high mold development cost, and thus increasing the development cost of the battery module. CN 210 744 017 U discloses the preamble of claim 1.

### SUMMARY

In the disclosure, a harness isolation plate and a battery module are provided for at least solving the problem of high development cost of the battery module, which is caused by an excessive large size of the harness isolation plate in the case where the size of the battery module increases.

In a first aspect, the harness isolation plate provided in the disclosure has a length direction and a width direction. The harness isolation plate includes multiple isolation sub-plates arranged in sequence along the length direction. Each isolation sub-plate is provided with at least one of a positioning assembly or a mating assembly corresponding to the positioning assembly at at least one end along the length direction. Two adjacent isolation sub-plates are movably connected together via the positioning assembly and the mating assembly.

In the disclosure, multiple separate isolation sub-plates form the harness isolation plate. Each isolation sub-plate may be separately processed and formed by injection molding. The size of each isolation sub-plate is relatively small, so that the difficulty of open mold for each isolation sub-plate is reduced. Multiple isolation sub-plates may be combined to form harness isolation plates of different sizes to adapt to battery modules of different sizes. Additionally, there is no need to design the harness isolation plate according to the size of the battery module, so that the mold development cost for the harness isolation plate can be reduced, thereby effectively reducing the development cost of the battery module. In addition, multiple isolation sub-plates are assembled into the harness isolation plate by connecting corresponding and matching positioning assemblies and mating assemblies. Connection structures between the isolation sub-plates are simple and thus it is convenient to assemble the isolation sub-plates. The positioning assembly and the mating assembly can be movably connected together, so that the error caused by stacking of battery cells can be absorbed.

In a second aspect, the battery module provided in the disclosure includes a battery cell group, the harness isolation plate described in any embodiment of the disclosure, and multiple electrical connection members. The battery cell group includes multiple battery cells arranged in sequence along a same direction. Each battery cell is provided with an electrical connection terminal. The harness isolation plate is located at a side of the battery cell group where the electrical connection terminal is located. The multiple electrical connection members are arranged side by side at two ends of the harness isolation plate along the width direction. The multiple electrical connection members are electrically connected to the multiple battery cells, and two electrical connection terminals of two adjacent battery cells are electrically connected via the electrical connection member on the harness isolation plate.

In the battery module provided in the disclosure, multiple separate isolation sub-plates form the harness isolation plate. Each isolation sub-plate may be separately processed and formed by injection molding. The size of each isolation sub-plate is relatively small, so that the difficulty of open mold for each isolation sub-plate is reduced. Multiple isolation sub-plates may be combined to form harness isolation plates of different sizes to adapt to battery modules of different sizes. Additionally, there is no need to design the harness isolation plate according to the size of the battery module, so that the mold development cost for the harness isolation plate can be reduced, thereby effectively reducing the development cost of the battery module. In addition, multiple isolation sub-plates can be assembled into the harness isolation plate by connecting corresponding and matching positioning assemblies and mating assemblies. Connection structures between the isolation sub-plates are simple and thus it is convenient to assemble the isolation sub-plates. The positioning assembly and the mating assembly can be movably connected together, so that the error caused by stacking of battery cells can be absorbed.

### BRIEF DESCRIPTION OF THE DRAWINGS

To describe the technical solutions in embodiments of the disclosure more clearly, the following briefly introduces the accompanying drawings required for describing the embodiments.
FIG. 1 is a schematic perspective view of a battery module provided in embodiments of the disclosure.
FIG. 2 is a schematic exploded perspective view of a harness isolation plate provided in embodiments of the disclosure.
FIG. 3 is a schematic perspective view of a first isolation sub-plate in a harness isolation plate provided in embodiments of the disclosure.
FIG. 4 is a schematic perspective view of a third isolation sub-plate in a harness isolation plate provided in embodiments of the disclosure.
FIG. 5 is a schematic perspective view of a second isolation sub-plate in a harness isolation plate provided in embodiments of the disclosure.
FIG. 6 is a schematic perspective view illustrating a positioning assembly and a mating assembly in the isolation sub-plate illustrated in FIG. 2.
FIG. 7 is a partially schematic perspective view illustrating connection between a battery cell and a harness isolation plate in a battery module provided in embodiments of the disclosure.
FIG. 8 is a schematic perspective view of an electrical connection member in a harness isolation plate provided in embodiments of the disclosure.
FIG. 9 is a schematic perspective view illustrating connection between a harness isolation plate and electrical connection members provided in embodiments of the disclosure.

### Reference numerals:

length direction X, width direction Y, height direction Z;
harness isolation plate 100, isolation sub-plate 10, first isolation sub-plate 11, first end 111, second end 113, first sub-portion 115, second sub-portion 117, first limiting member 12, second isolation sub-plate 13, third end 131, fourth end 133, fifth sub-portion 135, sixth sub-portion 137, extension portion 14, second limiting member 141, notch 143, third isolation sub-plate 15, fifth end 151, sixth end 153, third sub-portion 155, fourth sub-portion 157, positioning assembly 20, first guiding portion 21a, second guiding portion 21b, chamfered latch portion 211, first snap-fit portion 23, hook 231, mating assembly 40, first mating portion 41a, second mating portion 41b, receiving cavity 411, third opening 413, first engaging portion 43, baffle 431, accommodating cavity 433, first opening 435, second opening 437, harness 90;
electrical connection member 200, third mating portion 201, fourth mating portion 203, second hole 205;
battery cell group 300, battery cell 301, electrical connection terminal 3011, first hole 3012; steel tie 400;
end plate 500;
battery module 1000.

### DETAILED DESCRIPTION

The following will describe technical solutions of embodiments of the disclosure clearly and comprehensively with reference to accompanying drawings of the embodiments of the disclosure. Apparently, the embodiments described herein are merely some embodiments, rather than all the embodiments, of the disclosure. Based on the embodiments of the disclosure, other embodiments obtained by those of ordinary skill in the art without creative efforts shall fall within the protection scope of the disclosure.

The following embodiments are illustrated with reference to the accompanying drawings to illustrate specific embodiments that can be implemented in the disclosure. Directional terms such as "on", "upper", "under", "below", "beneath", "front", "back" , "left", "right", "in", "inside", "out", "outside", "side", and the like in the disclosure, only refer to the directions in the accompanying drawings. Therefore, directional terms are only used to better and clearly illustrate and understand the present disclosure, rather than explicitly or implicitly indicate that apparatuses or components referred to herein must have a certain orientation or be configured or operated in a certain orientation, and therefore the directional terms used herein cannot be understood as limitation to the disclosure.

In addition, serial numbers assigned to elements, members, or components herein, such as "first", "second", or the like, are only used to distinguish described objects, rather than describing a particular order or technical meaning. The terms "connection" and "coupling" in the disclosure include direct connection (coupling) and indirect connection (coupling) unless stated otherwise.

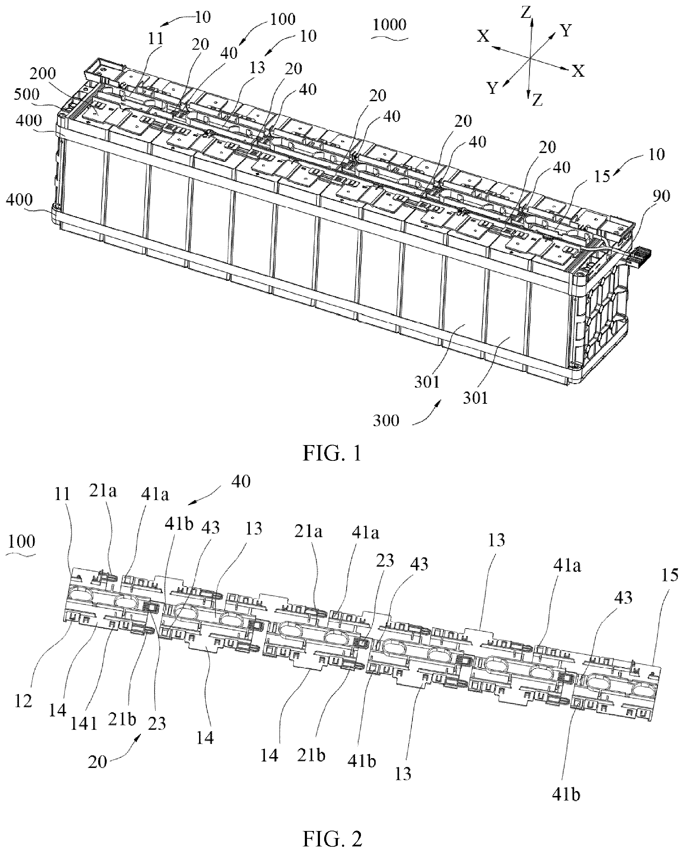

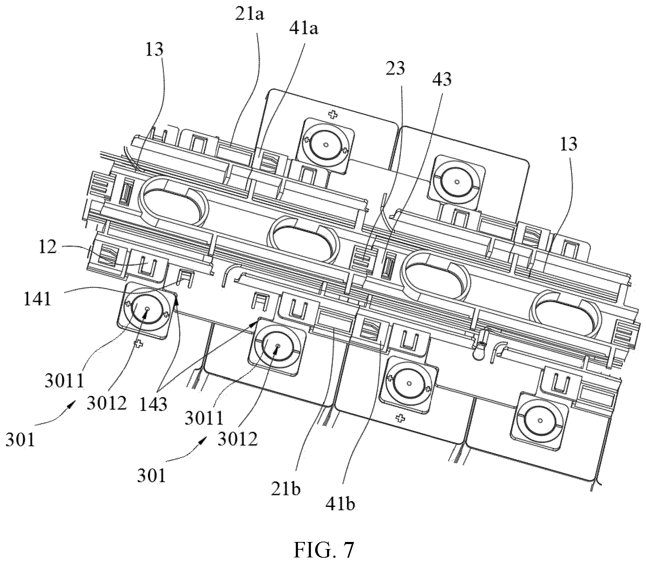

As illustrated in FIG. 1 and FIG. 2, a battery module 1000 is provided in the embodiments of the disclosure. The battery module 1000 includes a harness isolation plate 100 provided in any embodiment of the disclosure, a battery cell group 300, and multiple electrical connection members 200. The harness isolation plate 100 has a length direction *X* and a width direction Y. The harness isolation plate 100 includes multiple isolation sub-plates 10 arranged in sequence along the length direction X. Each isolation sub-plate 10 is provided with at least one of a positioning assembly 20 or a mating assembly 40 corresponding to the positioning assembly 20 at at least one end along the length direction X. Two adjacent isolation sub-plates 10 are movably connected together via the positioning assembly 20 and the mating assembly 40. The battery cell group 300 includes multiple battery cells 301 arranged in sequence in a same direction. Each battery cell 301 is provided with an electrical connection terminal 3011 (as illustrated in FIG. 7). The harness isolation plate 100 is located at a side of the battery cell group 300 where the electrical connection terminal 3011 is located. The multiple electrical connection members 200 are arranged side by side at two ends of the harness isolation plate 100 along the width direction *Y* of the harness isolation plate 100. The multiple electrical connection members 200 are electrically connected to the multiple battery cells 301. Two electrical connection terminals 3011 of two adjacent battery cells 301 are electrically connected via the electrical connection member 200 on the harness isolation plate 100.

The battery module includes the harness isolation plate and the battery cell group. The harness isolation plate is integrally formed by a mold, and the size of the integrally-formed harness isolation plate is close to the size of the battery module. As the requirements for the energy density of the battery module increase, the size of the battery module also increases, which in turn increases the size of the harness isolation plate. To adapt to battery modules with different series configurations, harness isolation plates of different sizes need to be designed and molded separately, leading to the high mold development cost, and thus increasing the development cost of the battery module.

In the battery module 1000 of the disclosure, multiple separate isolation sub-plates 10 form the harness isolation plate 100. Each isolation sub-plate 10 may be separately processed and formed by injection molding. The size of each isolation sub-plate 10 is relatively small, so that the difficulty of open mold for each isolation sub-plate 10 is reduced. Multiple isolation sub-plates 10 may be combined to form harness isolation plates 100 of different sizes to adapt to battery modules 1000 of different sizes. Additionally, there is no need to design the harness isolation plate 100 according to the size of the battery module 1000, so that the mold development cost for the harness isolation plate 100 can be reduced, thereby effectively reducing the development cost of the battery module 1000. In addition, multiple isolation sub-plates 10 can be assembled into the harness isolation plate 100 by connecting corresponding and matching positioning assemblies 20 and mating assemblies 40. Connection structures between the isolation sub-plates 10 are simple and thus it is convenient to assemble the isolation sub-plates 10. The positioning assembly 20 and the mating assembly 40 can be movably connected together, so that the error caused by stacking of the battery cells 301 can be absorbed. The multiple battery cells 301 are arranged in one-to-one correspondence at two sides of the harness isolation plate 100 along the width direction Y. The electrical connection members 200 are configured to connect the multiple battery cells 301 in series, in parallel, or in mixed connection. The multiple battery cells 301 at two sides of the harness isolation plate 100 along the width direction Yare arranged along the length direction *X* of the harness isolation plate 100. The battery module 1000 further includes a steel tie 400. The multiple battery cells 301 are fixed by the steel tie 400.

In a possible embodiment, the battery module 1000 may further include an end plate 500. The end plate 500 is disposed on one side of each battery cell 301 along a height direction Z of the harness isolation plate 100. The harness isolation plate 100 is disposed on the end plate 500.

Referring to FIG. 2, FIG. 3, and FIG. 4, furthermore, along the height direction Z, a projection of the first isolation sub-plate 11 and a projection of the third isolation sub-plate 15 are both L-shaped.

It can be seen that, along the height direction Z, an area of the projection of the first isolation sub-plate 11 is not equal to an area of the projection of the third isolation sub-plate 15. In the case where there is a need to form the harness isolation plate 100 of a relatively small size, the harness isolation plate 100 of a small size may be formed by connecting only the first isolation sub-plate 11 and the third isolation sub-plate 15. The projection of the first isolation sub-plate 11 and the projection of the third isolation sub-plate 15 are both L-shaped, and thus by means of assembling the first isolation sub-plate 11 and the third isolation sub-plate 15 along the length direction X, the harness isolation plate 100 with a rectangular structure and a small size can be formed to adapt to the maximum outline of the battery module 1000 of a small size (as illustrated in FIG. 1).

Referring to FIG. 2 to FIG. 5, furthermore, along the height direction Z, a projection of the second isolation sub-plate 13 is Z-shaped.

It can be seen that, along the height direction Z, the second isolation sub-plate 13 with a Z-shaped projection can be disposed between the first isolation sub-plate 11 with an L-shaped projection and the third isolation sub-plate 15 with an L-shaped projection. The first isolation sub-plate 11, the second isolation sub-plate 13, and the third isolation sub-plate 15 are connected together along the length direction X to form the harness isolation plate 100 with a rectangular structure to adapt to the battery module 1000 whose maximum outline is rectangular (as illustrated in FIG. 1).

The harness isolation plate 100 may be formed by one first isolation sub-plate 11 and one third isolation sub-plate 15 to form one small-sized harness isolation plate 100. Alternatively, the harness isolation plate 100 may be formed by one first isolation sub-plate 11, one second isolation sub-plate 13, and one first third isolation sub-plate 15 to form a medium-sized harness isolation plate 100. Alternatively, the harness isolation plate 100 may be formed by one first isolation sub-plate 11, multiple second isolation sub-plates 13, and one third isolation sub-plate 15, and along the length direction X, the multiple second isolation sub-plates 13 are arranged between the first isolation sub-plate 11 and the third isolation sub-plate 15 to form a large-sized harness isolation plate 100.

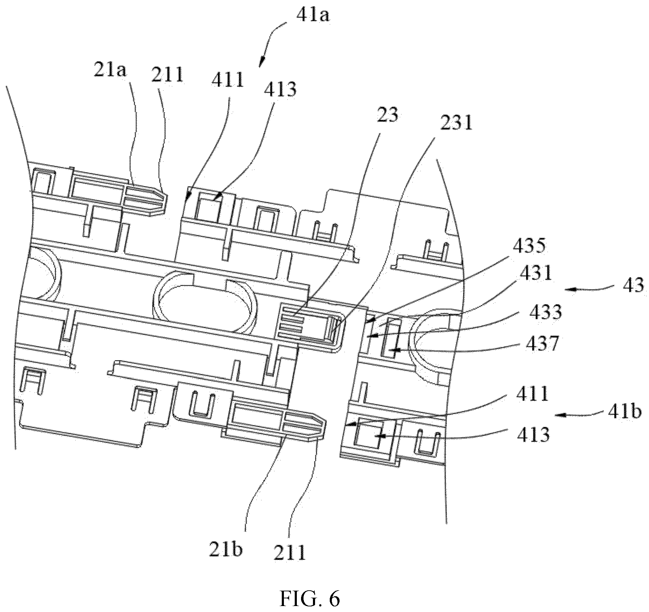

In conjunction with FIG. 6, furthermore, the positioning assembly 20 includes a first guiding portion 21a, a first snap-fit portion 23, and a second guiding portion 21b arranged in sequence at intervals along the width direction Y. The mating assembly 40 includes a first mating portion 41a, a first engaging portion 43, and a second mating portion 41b arranged in sequence at intervals along the width direction Y. The first guiding portion 21a is matingly connected to the first mating portion 41a. The first snap-fit portion 23 is matingly connected to the first engaging portion 43. The second guiding portion 21b is matingly connected to the second mating portion 41b. It may be understood that, the first guiding portion 21a may be matingly connected to the first mating portion 41a in a manner of pinned connection, the first snap-fit portion 23 may be matingly connected to the first engaging portion 43 in a manner of pinned connection, and the second guiding portion 21b may be matingly connected to the second mating portion 41b in a manner of pinned connection. Specifically, the first snap-fit portion 23 may be matingly connected to the first engaging portion 43 in a manner of snap-fit connection, to position two adjacent isolation sub-plates 10 along the length direction X.

It can be seen that, in the process of assembling multiple isolation sub-plates 10 (such as the first isolation sub-plate 11, the second isolation sub-plate 13, and the third isolation sub-plate 15) into the harness isolation plate 100, the multiple isolation sub-plates 10 can be assembled into the harness isolation plate 100 by matingly connecting the first guiding portion 21a to the first mating portion 41a, snapping the first snap-fit portion 23 into the first engaging portion 43, and matingly connecting the second guiding portion 21b to the second mating portion 41b. Compared with the assembling achieved via only the first guiding portion 21a and the first mating portion 41a, the assembling achieved via only the first snap-fit portion 23 and the first engaging portion 43, or the assembling achieved via only the second guiding portion 21b and the second mating portion 41b, by matingly connecting the first guiding portion 21a to the first mating portion 41a, snapping the first snap-fit portion 23 into the first engaging portion 43, and matingly connecting the second guiding portion 21b to the second mating portion 41b, it is simple and easy to connect the multiple isolation sub-plates 10, and movement in multiple directions can be limited via the positioning assembly 20 and the mating assembly 40, thereby ensuring the structural strength of the harness isolation plate 100 assembled.

Further, an extension length of the first guiding portion 21a along the length direction *X* and an extension length of the second guiding portion 21b along the length direction *X* are both greater than an extension length of the first snap-fit portion 23 along the length direction X.

It can be seen that, during a process of assembling two adjacent isolation sub-plates 10 by moveably connecting the positioning assembly 20 to the mating assembly 40, the first isolation sub-plate 11 and the second isolation sub-plate 13 are connected by movably connecting the positioning assembly 20 to the mating assembly 40, and in a case where the second isolation sub-plate 13 is implemented as multiple second isolation sub-plates 13, two adjacent second isolation sub-plates 13 are connected together by matingly connecting the positioning assembly 20 to the mating assembly 40, and the second isolation sub-plate 13 and the third isolation sub-plate 15 are connected together by movably connecting the positioning assembly 20 to the mating assembly 40, finally, the whole harness isolation plate 100 is obtained.

Since the extension length of the first guiding portion 21a along the length direction X and the extension length of the second guiding portion 21b along the length direction *X* are both greater than the extension length of the first snap-fit portion 23 along the length direction X, and the extension length of the first guiding portion 21a along the length direction *X* is greater than the extension length of the second guiding portion 21b along the length direction X, during assembling multiple isolation sub-plates 10 along the length direction X, firstly, the first guiding portion 21a can be matingly connected to the first mating portion 41a, and the second guiding portion 21b can be matingly connected to the second mating portion 41b, and then under the guidance of the first guiding portion 21a and the second guiding portion 21b, the first snap-fit portion 23 can move along the length direction *X* to be aligned with a corresponding first engaging portion 43, so that the time for assembling the first snap-fit portion 23 and the first engaging portion 43 can be shortened, thereby shortening the time for assembling the multiple isolation sub-plates 10.

Furthermore, the extension length of the first guiding portion 21a along the length direction *X* is not equal to the extension length of the second guiding portion 21b along the length direction X. Since the extension length of the first guiding portion 21a along the length direction *X* is not equal to the extension length of the second guiding portion 21b along the length direction X, the time for connecting the first guiding portion 21a to the first mating portion 41a is not equal to the time for connecting the second guiding portion 21b to the second mating portion 41b. During assembling the first guiding portion 21a and the second guiding portion 21b at two sides, it is only to align one of the guiding portions (the first guiding portion 21a or the second guiding portion 21b) with a corresponding mating portion (the first mating portion 41a or the second mating portion 41b), and there is no need to align each of the two guiding portions with a corresponding mating portion to perform assembling, thereby effectively shortening the time for assembling.

For example, the extension length of the first guiding portion 21a along the length direction *X* may be greater than the extension length of the second guiding portion 21b along the length direction X. In this case, during movably connecting the positioning assembly 20 to the mating assembly 40, the first thing to do is to matingly connect the first guiding portion 21a to the first mating portion 41a, and during matingly connecting the first guiding portion 21a to the first mating portion 41a, the second guiding portion 21b is gradually matingly connected to the second mating portion 41b. During a process that the second guiding portion 21b is matingly connected to the second mating portion 41b, under the guidance of the first guiding portion 21a and the second guiding portion 21b, the first snap-fit portion 23 is aligned with the first engaging portion 43 to achieve a snap-fit connection.

Further, the first guiding portion 21a, the first snap-fit portion 23, and the second guiding portion 21b are arranged in sequence at intervals along the width direction Yat one end of the isolation sub-plate 10 along the length direction X. The first mating portion 41a, the first engaging portion 43, and the second mating portion 41b are arranged in sequence at intervals along the width direction *Y* at another end of the isolation sub-plate 10 along the length direction X.

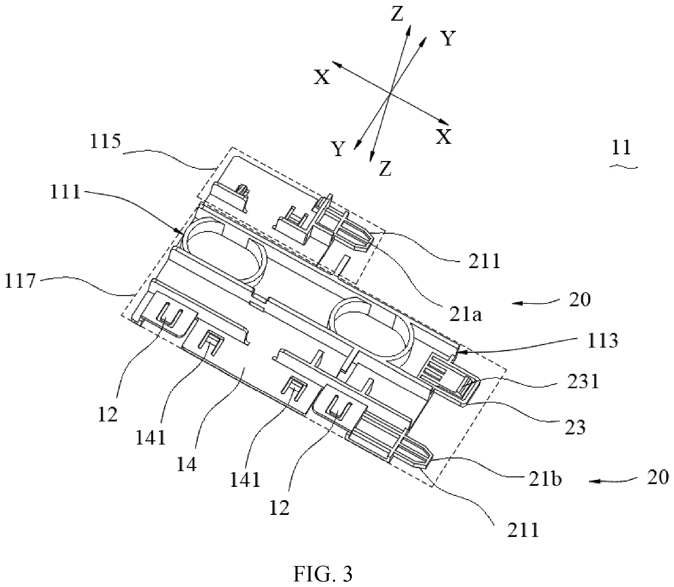

In conjunction with FIG. 3, specifically, in the first isolation sub-plate 11, the first isolation sub-plate 11 is provided with the positioning assembly 20. The first isolation sub-plate 11 includes a first end 111 and a second end 113 that are oppositely arranged along the length direction X. The first guiding portion 21a, the first snap-fit portion 23, and the second guiding portion 21b are arranged at the second end 113 of the first isolation sub-plate 11.

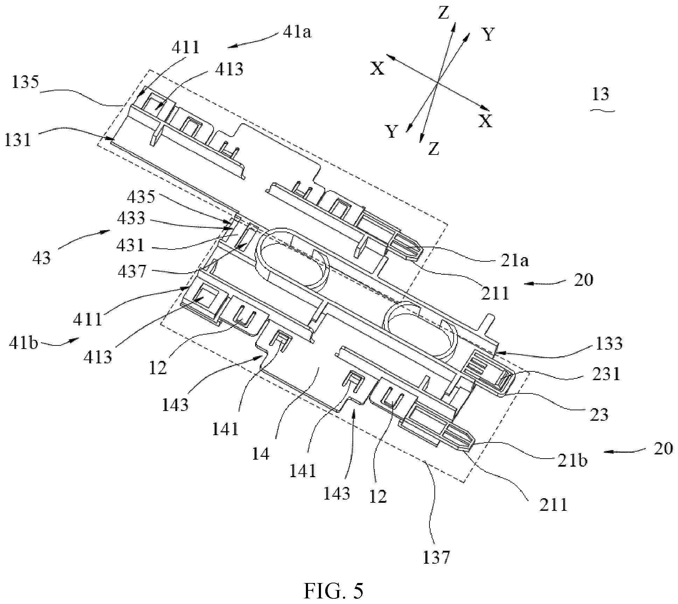

In conjunction with FIG. 5, in the second isolation sub-plate 13, the second isolation sub-plate 13 is provided with the positioning assembly 20 and the mating assembly 40. The second isolation sub-plate 13 includes a third end 131 and a fourth end 133 that are oppositely arranged along the length direction *X.* Along the length direction *X,* the third end 131 is closer to the second end 113 of the first isolation sub-plate 11 than the fourth end 133. The first mating portion 41a, the first engaging portion 43, and the second mating portion 41b are disposed at the third end 131. The first guiding portion 21a, the first snap-fit portion 23, and the second guiding portion 21b are disposed at the fourth end 133 of the second isolation sub-plate 13. The first isolation sub-plate 11 and the second isolation sub-plate 13 can be connected together by movably connecting the positioning assembly 20 at the second end 113 to the mating assembly 40 at the third end 131.

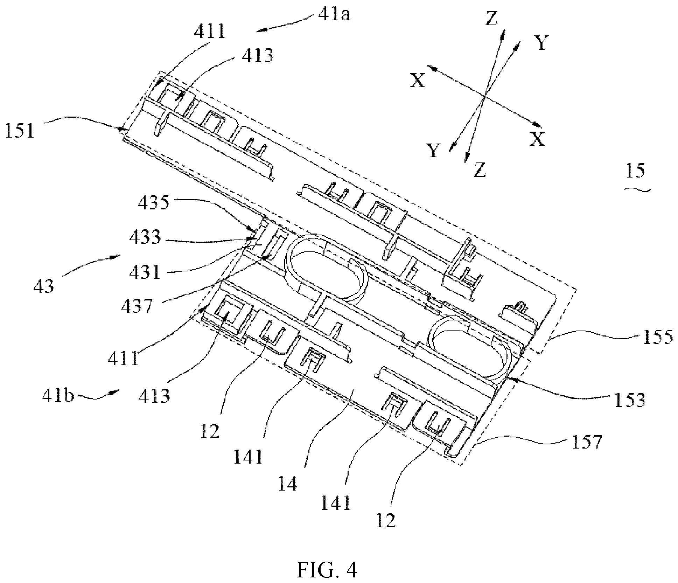

In conjunction with FIG. 4, in the third isolation sub-plate 15, the third isolation sub-plate 15 is provided with the mating assembly 40. The third isolation sub-plate 15 includes a fifth end 151 and a sixth end 153 that are oppositely arranged along the length direction X. Along the length direction X, the fifth end 151 is closer to the fourth end 133 of the second isolation sub-plate 13 than the sixth end 153. The first mating portion 41a, the first engaging portion 43, and the second mating portion 41b are disposed at the fifth end 151. The second isolation sub-plate 13 and the third isolation sub-plate 15 can be connected together by movably connecting the positioning assembly 20 at the fourth end 133 to the mating assembly 40 at the fifth end 151.

It can be seen that, for the first isolation sub-plate 11 provided with the positioning assembly 20, the first guiding portion 21a, the first snap-fit portion 23, and the second guiding portion 21b of the positioning assembly 20 are disposed at one end of the first isolation sub-plate 11 along the length direction X; for the second isolation sub-plate 13 provided with the positioning assembly 20, the first guiding portion 21a, the first snap-fit portion 23, and the second guiding portion 21b of the positioning assembly 20 are disposed at one end of the second isolation sub-plate 13 away from the first isolation sub-plate 11 along the length direction X; for the second isolation sub-plate 13 provided with the mating assembly 40, the first mating portion 41a, the first engaging portion 43, and the second guiding portion 21b of the mating assembly 40 are disposed at one end of the second isolation sub-plate 13 close to the first isolation sub-plate 11 along the length direction X; and for the third isolation sub-plate 15 provided with the mating assembly 40, the first mating portion 41a, the first engaging portion 43, and the second mating portion 41b of the mating assembly 40 are disposed at one end of the third isolation sub-plate 15 close to the second isolation sub-plate 13 along the length direction X. In this way, the first isolation sub-plate 11, the second isolation sub-plate 13, and the third isolation sub-plate 15 can be connected in sequence by matingly connecting the first guiding portion 21a to the first mating portion 41a, matingly connecting the second guiding portion 21b to the second mating portion 41b, and matingly connecting the first snap-fit portion 23 to the first engaging portion 43, to form the harness isolation plate 100.

In conjunction with FIG. 6, further, the first snap-fit portion 23 includes a hook 231. The first engaging portion 43 includes a baffle 431, an accommodating cavity 433, a first opening 435, and a second opening 437. The first opening 435 and the second opening 437 are both in communication with the accommodating cavity 433. The first opening 435 is defined at a side of the baffle 431 along the length direction X, and the second opening 437 is defined at another side of the baffle 431 along the length direction X. The hook 231 is inserted in the accommodating cavity 433 from the first opening 435 and at least partially extends out from the second opening 437. The baffle 431 is configured to prevent the hook 231 from disengaging from the accommodating cavity 433.

Specifically, along the length direction X, the first opening 435 is located at a side of the accommodating cavity 433 that is closest to an isolation sub-plate 10. The second opening 437 and the baffle 431 are both located at a side of the accommodating cavity 433 that is away from the battery cell 301 along the height direction Z (as illustrated in FIG. 1). The baffle 431 extends along the width direction Y. Both sides of the accommodating cavity 433 along the width direction *Y* are closed, so that after the hook 231 is inserted into the accommodating cavity 433, the hook 231 can be prevented from extending out from the two sides of the accommodating cavity 433 along the width direction Y to position two isolation sub-plates 10 in the width direction Y.

It can be seen that, a specific process of connecting two adjacent isolation sub-plates 10 together via the first snap-fit portion 23 and the first engaging portion 43 may be as follows. Make the hook 231 of the first snap-fit portion 23 face the first opening 435 in the length direction X, insert the hook 231 into the accommodating cavity 433 from the first opening 435 until a portion of the hook 231 extends out from the second opening 437 and abuts against the baffle 431, so that movement of the two isolation sub-plates 10 in the length direction *X* is limited. Further, after the hook 231 extends out from the second opening 437, under external force, the hook 231 can move in the second opening 437 along the length direction X, and thus during assembling the harness isolation plate 100 to the battery cell group 300 (as illustrated in FIG. 1), the error caused by stacking of multiple battery cells 301 can be obsorbed. In addition, the first opening 435, the baffle 431, and the second opening 437 are located merely at one side of the accommodating cavity 433 along the length direction X, the baffle 431 and the second opening 437 are located at a side of the accommodating cavity 433 that is away from the battery cell 301, and both sides of the accommodating cavity 433 along the width direction *Y* are closed, and thus after the hook 231 is inserted into the accommodating cavity 433, the hook 231 can be prevented from moving along the width direction *Y* in the accommodating cavity 433, to position the two isolation sub-plates 10 in the width direction Y.

Further, the hook 231 is movable in the second opening 437 along the length direction *X.* The hook 231 is movable in the second opening 437 in a distance range of [0.20mm, 1.00mm]. For example, the distance that the hook 231 can move in the second opening 437 along the length direction *X* may be 0.20mm, 0.34mm, 0.40mm, 0.51mm, 0.64mm, 0.73mm, 0.81mm, 0.88mm, 0.95mm, or 1.00mm, which is not exhaustively illustrated. The hook 231 is movable in the second opening 437 along the length direction *X* in the range of [0.20mm, 1.00mm], so that it can be ensured that by means of the hook 231 and the baffle 431, not only movement of two adjacent isolation sub-plates 10 can be limited, but also two adjacent isolation sub-plates 10 can absorb the error caused by stacking of multiple battery cells 301.

In conjunction with FIG. 6, further, the first mating portion 41a and the second mating portion 41b both define a receiving cavity 411 and a third opening 413 that communicate with each other. The third opening 413 is defined at a side of the receiving cavity 411 along the length direction X. The first guiding portion 21a has a chamfered latch portion 211 at an end away from the isolation sub-plate 10. The second guiding portion 21b has a chamfered latch portion 211 at an end away from the isolation sub-plate 10. The chamfered latch portion 211 of the first guiding portion 21a is inserted in the receiving cavity 411 of the first mating portion 41a from the third opening 413 of the first mating portion 41a. The chamfered latch portion 211 of the second guiding portion 21b is inserted in the receiving cavity 411 of the second mating portion 41b from the third opening 413 of the second mating portion 41b.

Specifically, along the length direction X, the third opening 413 is located at a side of the receiving cavity 411 that is closest to one isolation sub-plate 10. The specific structure of the first guiding portion 21a is the same as the specific structure of the second guiding portion 21b except that the extension length of first guiding portion 21a along the length direction *X* is not equal to the extension length of the second guiding portion 21b along the length direction X. Similarly, the specific structure of the first mating portion 41a is the same as the specific structure of the second mating portion 41b except that the extension length of first mating portion 41a along the length direction *X* is not equal to the extension length of the second mating portion 41b along the length direction X.

It can be seen that, the specific process of connecting the first guiding portion 21a to the first mating portion 41a may be as follows. When the first guiding portion 21a is close to the third opening 413 of the first mating portion 41a, gradually insert the chamfered latch portion 211 of the first guiding portion 21a into the receiving cavity 411 of the first mating portion 41a along the two opposite side walls of the receiving cavity 411 along the width direction Y. If the first guiding portion 21a is not provided with the chamfered latch portion 211 at an end away from the isolation sub-plate 10 (provided with the first guiding portion 21a) along the length direction X, during the process of inserting the first guiding portion 21a into the receiving cavity 411 of the first mating portion 41a, the first guiding portion 21a may be deflected slightly during movement of the first guiding portion 21a, so that the first guiding portion 21a may be easy to be stuck between two sides of the receiving cavity 411 of the first mating portion 41a. In the case where the first guiding portion 21a is stuck in the receiving cavity 411 of the first mating portion 41a, it needs to adjust the first guiding portion 21a to insert the first guiding portion 21a into the receiving cavity 411 of the first mating portion 41a, so that the time for inserting the first guiding portion 21a into the receiving cavity 411 of the first mating portion 41a is increased. The chamfered latch portion 211 located at the end of the first guiding portion 21a away from the isolation sub-plate 10 along the length direction *X* makes it easy to insert the first guiding portion 21a into the receiving cavity 411 of the first mating portion 41a, and thus the time for connecting the first guiding portion 21a to the first mating portion 41a can be effectively shortened. In addition, the receiving cavity 411 of the first mating portion 41a defines the third opening 413 only at one side along the length direction X, the first guiding portion 21a can be inserted into or pulled out from the receiving cavity 411 of the first mating portion 41a through the third opening 413, two sides of the receiving cavity 411 of the first mating portion 41a along the width direction *Y* are closed, and two sides of the receiving cavity 411 of the first mating portion 41a along the height direction Z may be closed or provided with a blocking portion, and thus the first guiding portion 21a can be prevented from moving along the length direction *Y* and the height direction Z to position two isolation sub-plates 10 in the length direction *Y* and the height direction Z. The specific process of connecting the second guiding portion 21b to the second mating portion 41b is the same as the process of connecting the first guiding portion 21a to the first mating portion 41a, except that the time for inserting the second guiding portion 21b into the receiving cavity 411 of the second mating portion 41b is not equal to the time for inserting the first guiding portion 21a into the receiving cavity 411 of the first mating portion 41a.

Further, a movement distance of the chamfered latch portion 211 in the third opening 413 along the length direction *X* is in a range of [0.2 mm, 1.0 mm]. The first guiding portion 21a, the second guiding portion 21b, and the first snap-fit portion 23 are all disposed on the same isolation sub-plate 10. In the case where the first snap-fit portion 23 moves along the length direction *X* in the first engaging portion 43 which is movably connected to the first guiding portion 21a, the first guiding portion 21a and the second guiding portion 21b both move along with the movement of the first snap-fit portion 23. If the movement distance of the chamfered latch portion 211 in the third opening 413 along the length direction *X* is set to be in a range of [0.2 mm, 1.0 mm], in the case where the first snap-fit portion 23 moves in the second opening 437 along the length direction *X* under the action of an external force, the synchronization of connections among the first guiding portion 21a, the second guiding portion 21b, and the first snap-fit portion 23 on two adjacent insulation sub-plates 10 can be ensured, so that two insulation sub-plates 10 connected together can absorb the error generated by stacking of the battery cells 301.

Referring to FIGS. 2, 7, and 8, furthermore, each isolation sub-plate 10 is further provided with a first limiting member 12. The first limiting member 12 is arranged at at least one side of the isolation sub-plate 10 along the width direction Y. The electrical connection member 200 is formed with a third mating portion 201. One of the first limiting member 12 and the third mating portion 201 is provided with a first protrusion, and the other of the first limiting member 12 and the third mating portion 201 is provided with a first connection hole. The first protrusion is connected to the first connection hole.

For example, the first limiting member 12 may be implemented as one or more first limiting members 12. In the case where the first limiting member 12 is implemented as multiple first limiting members 12, some of the first limiting members 12 are arranged at one side of each isolation sub-plate 10 along the width direction Y, and the remaining of the first limiting members 12 are arranged at the opposite side of each isolation sub-plate 10 along the width direction *Y.* Both sides of each isolation sub-plate 10 along the width direction *Y* are each connected to one electrical connection member 200. The electrical connection member 200 is used to electrically connect positive and negative terminals of adjacent battery cells 301 (as illustrated in FIG. 1).

It can be seen that, the first limiting member 12 is arranged at at least one side of the isolation sub-plate 10 along the width direction Y, the positioning assembly 20 and the first limiting member 12 are respectively located at different sides of the isolation sub-plate 10, and the mating assembly 40 and the first limiting member 12 are respectively located at different sides of the isolation sub-plate 10, and thus connecting of the first limiting member 12 to the third mating portion 201 of the electrical connection member 200 does not obstruct connecting of two adjacent isolation sub-plates 10. One of the first limiting member 12 and the third mating portion 201 is provided with the first protrusion, the other of the first limiting member 12 and the third mating portion 201 is provided with the first connection hole, and thus the electrical connection member 200 can be fixed to the isolation sub-plate 10 by means of connecting the first limiting member 12 and the third mating portion 201 via a snap-fit mechanism, which is simple.

Referring to FIGS. 3 to 5, further, each isolation sub-plate 10 further includes an extension portion 14. The extension portion 14 is arranged at at least one side of the isolation sub-plate 10 along the width direction X. The extension portion 14 and the first limiting member 12 are spaced apart in the length direction X. The extension portion 14 is provided with a second limiting member 141. The electrical connection member 200 is further formed with a fourth mating portion 203 spaced apart from the third mating portion 201. One of the second limiting member 141 and the fourth mating portion 203 is provided with a second protrusion, and the other of the second limiting member 141 and the fourth mating portion 203 is provided with a second connection hole. The second protrusion is connected to the second connection hole. Along the height direction Z, the electrical connection member 200 is located between the first limiting member 12 and the second limiting member 141.

In the embodiments of the disclosure, the extension length of the extension portion 14 of the second isolation sub-plate 13 along the width direction Y is greater than the extension length of the extension portion 14 of the first isolation sub-plate 11 along the width direction Y, the extension length of the extension portion 14 of the second isolation sub-plate 13 along the width direction Y is greater than the extension length of the extension portion 14 of the third isolation sub-plate 15 along the width direction Y, and the extension length of the extension portion 14 of the first isolation sub-plate 11 along the width direction Y may be equal to the extension length of the extension portion 14 of the third isolation sub-plate 15 along the width direction Y.

It can be seen that, each isolation sub-plate 10 is provided with the extension portion 14, the extension portion 14 is provided with the second limiting member 141, the electrical connection member 200 is further provided with the fourth mating portion 203, one of the second limiting member 141 and the fourth mating portion 203 is provided with the second protrusion, and the other of the second limiting member 141 and the fourth mating portion 203 is provided with the second connection hole, and thus the electrical connection member 200 can be fixed to the isolation sub-plate 10 through a snap-fit connection between the second protrusion and the second connection hole, thereby improving the stability of the connection between the electrical connection member 200 and each isolation sub-plate 10. Additionally, in the height direction Z, the electrical connection member 200 is located between the first limiting member 12 and the second limiting member 141. Movement of the electrical connection member 200 along the height direction Z can be limited by means of the first limiting member 12 and the second limiting member 141.

Furthermore, in the case where the first limiting member 12 is provided with the first protrusion and the second limiting member 141 is provided with the second protrusion, in the height direction Z, the protrusion direction of the first protrusion of the first limiting member 12 is opposite to the protrusion direction of the second protrusion of the second limiting member 141. In this way, in the case where both the first limiting member 12 and the second limiting member 141 are engaged with the electrical connection member 200, the electrical connection member 200 can be prevented from wobbling along the height direction Z, thereby ensuring the stability of the connection between the electrical connection members 200 and the isolation sub-plates 10.

Furthermore, the first isolation sub-plate 11 includes a first portion 115 and a second portion 117 arranged side by side along the width direction Y. An extension length of the first portion 115 in the length direction *X* is smaller than an extension length of the second portion 117 in the length direction X.

It can be seen that, the extension length of the first portion 115 along the length direction *X* is not equal to the extension length of the second portion 117 along the length direction X, resulting in that the projection of the first isolation sub-plate 11 along the height direction Z is approximately L-shaped. This allows the harness isolation plate 100, which has a small and rectangular structure, to be formed by connecting only the first isolation sub-plate 11 and the third isolation sub-plate 15, to adapt to the battery module 1000 the maximum outline of which is rectangular (as illustrated in FIG. 1).

Furthermore, the first isolation sub-plate 11 is provided with the positioning assembly 20. The positioning assembly 20 is located at one end of the first isolation sub-plate 11 close to the third isolation sub-plate 15, along the length direction X. The first snap-fit portion 23 and the second guiding portion 21b of the positioning assembly 20 are both located on the second portion 117. The first guiding portion 21a of the positioning assembly 20 is located on the first portion 115.

It can be seen that, in the first isolation sub-plate 11, the first isolation sub-plate 11 is provided with the positioning assembly 20, and the first guiding portion 21a and the second guiding portion 21b having different extension lengths are arranged on the first portion 115 and the second portion 117, respectively, which facilitates mating connection between guiding portions having different extension lengths and corresponding mating portions. Additionally, the first snap-fit portion 23 and one of the guiding portions (e.g., the second guiding portion 21b) are located on the second portion 117, and the extension length of the first snap-fit portion 23 is smaller than the extension length of the second guiding portion 21b, and thus for the second guiding portion 21b and the first snap-fit portion 23 on the same portion, the second guiding portion 21b can be aligned with a corresponding mating portion before alignment of the first snap-fit portion 23. This design avoids the need to place, on different portions, the second guiding portion 21b and the first snap-fit portion 23 that have different extension lengths, thus simplifying the structural design of the injection molding mold for the first isolation sub-plate 11.

Furthermore, the third isolation sub-plate 15 includes a third portion 155 and a fourth portion 157 arranged side by side along the width direction Y. An extension length of the third portion 155 along the length direction *X* is greater than an extension length of the fourth portion 157 along the length direction X.

It can be seen that, the extension length of the third portion 155 along the length direction *X* is not equal to the extension length of the fourth portion 157 along the length direction X, which results in that the projection of the third isolation sub-plate 15 along the height direction Z is approximately L-shaped. This allows the harness isolation plate 100 which has a small and rectangular structure (as illustrated in FIG. 1) to be formed by means of only the first isolation sub-plate 11 and the third isolation sub-plate 15, to adapt to the battery module 1000 the maximum outline of which is rectangular. During assembling the first isolation sub-plate 11 and the third isolation sub-plate 15 into the harness isolation plate 100, the first portion 115 is connected to the third portion 155 and the second portion 117 is connected to the fourth portion 157, to form the harness isolation plate 100 having a rectangular structure.

Furthermore, the third isolation sub-plate 15 is provided with the mating assembly 40. The mating assembly 40 is located at one end of the third isolation sub-plate 15 near the first isolation sub-plate 11 along the length direction X. The first mating portion 41a of the mating assembly 40 is arranged on the third portion 155, and both the first engaging portion 43 and the second mating portion 41b of the mating assembly 40 are arranged on the fourth portion 157.

It can be seen that, during assembling the first isolation sub-plate 11 and the third isolation sub-plate 15 into the harness isolation plate 100, the connection between the first portion 115 and the third portion 155 can be achieved by connecting the first guiding portion 21a on the first portion 115 to the first mating portion 41a on the third portion 155, where the first guiding portion 21a and the first mating portion 41a can provide guidance in the length direction X. Under the guidance of the first guiding portion 21a and the first mating portion 41a, the second guiding portion 21b on the second portion 117 can be connected to the second mating portion 41b on the fourth portion 157, which can provide further guidance in the length direction *X* to connect the first snap-fit portion 23 on the second portion 117 to the first engaging portion 43 on the fourth portion 157, thereby limiting movement of the first isolation sub-plate 11 and the third isolation sub-plate 15 in the length direction X.

It may be noted that, in the case where the first isolation sub-plate 11 and the third isolation sub-plate 15 are connected together, the total extension length of the first portion 115 and the third portion 155 along the length direction *X* may be equal to the total extension length of the second portion 117 and the fourth portion 157 along the length direction X. With such configuration, the harness isolation plate 100 which has a substantially rectangular structure can be formed by connecting the first isolation sub-plate 11 and the third isolation sub-plate 15.

Furthermore, the second isolation sub-plate 13 includes a fifth portion 135 and a sixth portion 137 arranged side by side along the width direction Y. At least a portion of one side of the fifth portion 135 along the width direction *Y* is connected to at least a portion of one side of the sixth portion 137 along the width direction *Y*.

It can be seen that, at least a portion of one side of the fifth portion 135 along the width direction *Y* is connected to at least a portion of one side of the sixth portion 137 along the width direction *Y,* so that the second isolation sub-plate 13, which has a Z-shaped projection along the height direction *Z,* can be formed.

Furthermore, the second isolation sub-plate 13 is provided with the positioning assembly 20 and the mating assembly 40. The positioning assembly 20 is located at one end of the second isolation sub-plate 13 near the first isolation sub-plate 11 along the length direction *X,* and the mating assembly 40 is located at the other end of the second isolation sub-plate 13 near the third isolation sub-plate 15 along the length direction *X.* In other words, the positioning assembly 20 is located at this end. The first guiding portion 21a of the positioning assembly 20 and the first mating portion 41a of the mating assembly 40 are both arranged on the fifth portion 135. The first snap-fit portion 23 and the second guiding portion 21b of the positioning assembly 20 are both arranged on the sixth portion 137, and the first engaging portion 43 and the second mating portion 41b of the mating assembly 40 are both arranged on the sixth portion 137.

It can be seen that, the second isolation sub-plate 13 is arranged between the first isolation sub-plate 11 and the third isolation sub-plate 15, one end of the fifth portion 135 where the first guiding portion 21a is located can be connected to one end of the third portion 155 where the first mating portion 41a is located, one end of the fifth portion 135 where the first mating portion 41a is located can be connected to one end of the first portion 115 where the first guiding portion 21a is located, one end of the sixth portion 137 where the second guiding portion 21b is located can be connected to one end of the fourth portion 157 where the second mating portion 41b is located, one end of the sixth portion 137 where the first snap-fit portion 23 is located can be connected to one end of the fourth portion 157 where the first engaging portion 43 is located, one end of the sixth portion 137 where the second mating portion 41b is located can be connected to one end of the second portion 117 where the second guiding portion 21b is located, and one end of the sixth portion 137 where the first engaging portion 43 is located can be connected to one end of the second portion 117 where the first snap-fit portion 23 is located.

It may be noted that, to connect two adjacent second isolation sub-plates 13, one end of the fifth portion 135 of one second isolation sub-plate 13, where the first guiding portion 21a is located, is connected to one end of the fifth portion 135 of the other second isolation sub-plate 13, where the first mating portion 41a is located, one end of the sixth portion 137 of one second isolation sub-plate 13, where the second guiding portion 21b is located, is connected to one end of the sixth portion 137 of the other second isolation sub-plate 13, where the second mating portion 41b is located, and one end of the sixth portion 137 of one second isolation sub-plate 13, where the first snap-fit portion 23 is located, is connected to one end of the sixth portion 137 of the other second isolation sub-plate 13, where the first engaging portion 43 is provided.

Referring to FIG. 5 and FIG. 7, furthermore, in the second isolation sub-plate 13, the extension portion 14 further defines notches 143. The notches 143 are located at both sides of one end of the extension portion 14 that is farthest from the fifth portion 135. In other words, the notches 143 are located at the end of the extension portion 14 that is farthest from the fifth portion 135. In each extension portion 14, there are two notches 143, and the two notches 143 are arranged side by side along the length direction X.

The electrical connection terminal 3011 defines a first hole 3012, and the electrical connection member 200 defines a second hole 205. In the case where the electrical connection member 200 is connected to the electrical connection terminal 3011, the first hole 3012 and the second hole 205 are aligned along the height direction Z, for example, if both the first hole 3012 and the second hole 205 are circular, the first hole 3012 and the second hole 205 are coaxial.

Two notches 143 are defined in each extension portion 14. In the case where the second isolation sub-plate 13 is connected to the battery cell 301 (as illustrated in FIG. 1), the notches 143 of the extension portion 14 along the length direction *X* can position the electrical connection terminals 3011 of adjacent battery cells 301. In addition, in the case where the electrical connection member 200 is connected to two adjacent battery cells 301, the electrical connection member 200 is located at one side of the extension portion 14 along the height direction Z, and two adjacent electrical connection terminals 3011 along the length direction X are partially located within the notches 143 at both sides, respectively, to position the electrical connection terminals 3011 of adjacent battery cells 301, so that the second hole 205 on the electrical connection member 200 can be aligned with the first hole 3012 on the electrical connection terminal 3011. Additionally, the second isolation sub-plate 13 is located between the first isolation sub-plate 11 and the third isolation sub-plate 15, so that the second isolation sub-plate 13 can be connected to the electrical connection terminals 3011 of more battery cells 301; the extension portion 14 of the second isolation sub-plate 13 defines the notches 143 to position the electrical connection terminals 3011 of the battery cells 301 located in the middle of the battery module 1000, thereby making the connection of multiple battery cells 301 more compact.

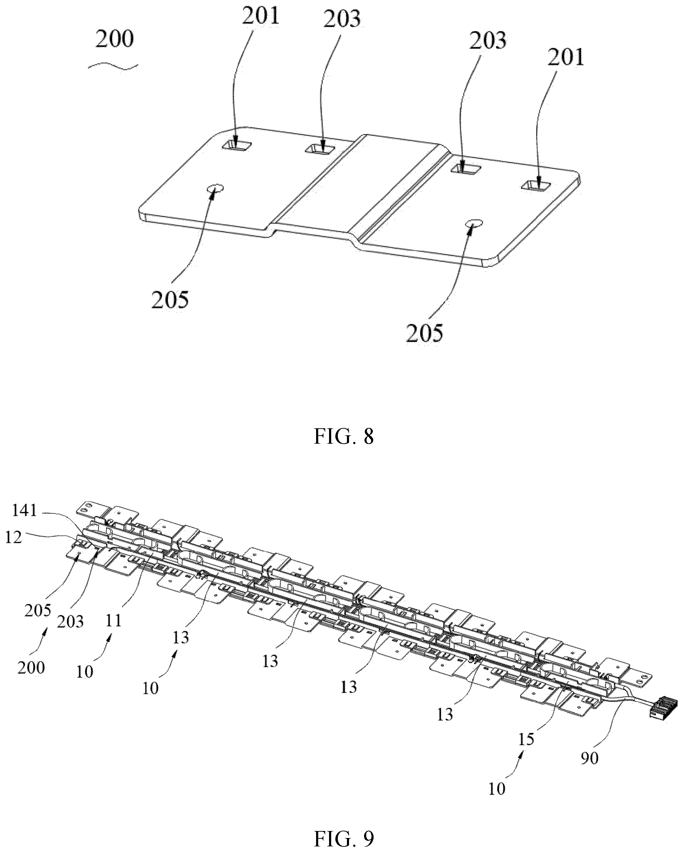

Referring to FIG. 9, furthermore, the harness isolation plate 100 further includes a harness 90. The harness 90 passes through the first isolation sub-plate 11, the second isolation sub-plate 13, and the third isolation sub-plate 15. The harness isolation plate 100 collects temperature and voltage data from the battery cells 301 via the harness 90.

The above describes some embodiments of the disclosure. It may be noted that those of ordinary skill in the art can make several modifications.

## Claims

1. A harness isolation plate (100), the harness isolation plate (100) having a length direction (X) and a width direction (Y) and comprising:
a plurality of isolation sub-plates (10) arranged in sequence along the length direction (X),; wherein
the harness isolation plate (100) comprises a first isolation sub-plate (11), at least one second isolation sub-plate (13), and a third isolation sub-plate (15) arranged in sequence along the length direction (X), wherein along a height direction (*X*) of the harness isolation plate (100), a projection of the first isolation sub-plate (11) and a projection of the third isolation sub-plate (15) are both L-shaped, and a projection shape of the second isolation sub-plate (13) is Z-shaped;
the at least one second isolation sub-plate (13) is provided with a mating assembly (40) at an end along the length direction (X) and a positioning assembly (20) at another end along the length direction (X);
the first isolation sub-plate (11) is provided with a positioning assembly (20) corresponding to the mating assembly (40) of the second isolation sub-plate (13) at an end along the length direction (X); and
the third isolation sub-plate (15) is provided with a mating assembly (40) corresponding to the positioning assembly (20) of the second isolation sub-plate (13) at an end along the length direction (X); the positioning assembly (20) comprises a first guiding portion (21a), a first snap-fit portion (23), and a second guiding portion (21b) arranged in sequence at intervals along the width direction (Y), and the mating assembly (40) comprises a first mating portion (41a), a first engaging portion (43), and a second mating portion (41b) arranged in sequence at intervals along the width direction (Y); the first guiding portion (21a) is matingly connected to the first mating portion (41a), the first snap-fit portion (23) is matingly connected to the first engaging portion (43), and the second guiding portion (21b) is matingly connected to the second mating portion (41b); **characterized in that**
an extension length of the first guiding portion (21a) along the length direction (*X*) and an extension length of the second guiding portion (21b) along the length direction (*X*) are both greater than an extension length of the first snap-fit portion (23) along the length direction (*X*); the extension length of the first guiding portion (21a) along the length direction (*X*) is not equal to the extension length of the second guiding portion (21b) along the length direction (*X*); the first snap-fit portion (23) comprises a hook (231), the first engaging portion (43) comprises a baffle (431), an accommodating cavity (433), a first opening (435), and a second opening (437), the first opening (435) and the second opening (437) are both in communication with the accommodating cavity (433), and the hook (231) is movable in the second opening (437) along the length direction (*X*).

2. The harness isolation plate of claim 1, wherein the first opening (435) is defined at a side of the baffle (431) along the length direction (*X*), the second opening (437) is defined at another side of the baffle (431) along the length direction (*X*), the hook (231) is inserted in the accommodating cavity (433) from the first opening (435) and at least partially extends out from the second opening (437), and the baffle (431) is configured to prevent the hook (231) from disengaging from the accommodating cavity (433).

3. The harness isolation plate of claim 1 or 2, wherein the hook (231) is movable in the second opening (437) in a distance range of [0.20mm, 1.00mm].

4. The harness isolation plate of claim 3, wherein the first mating portion (41a) and the second mating portion (41b) each define a receiving cavity (411) and a third opening (413) that communicate with each other, the third opening (413) is defined at a side of the receiving cavity (411) along the length direction (*X*), the first guiding portion (21a) has a chamfered latch portion (211) at an end away from the isolation sub-plate (10), the second guiding portion (21b) has a chamfered latch portion (211) at an end away from the isolation sub-plate (10), the chamfered latch portion (211) of the first guiding portion (21a) is inserted in the receiving cavity (411) of the first mating portion (41a) from the third opening (413) of the first mating portion (41a), and the chamfered latch portion (211) of the second guiding portion (21b) is inserted in the receiving cavity (411) of the second mating portion (41b) from the third opening (413) of the second mating portion (41b).

5. The harness isolation plate of claim 4, wherein the chamfered latch portion (211) is movable in the third opening (413) along the length direction (*X*) in a distance range of [0.2 mm, 1.0 mm].

6. A battery module (1000), comprising:
a battery cell group (300) comprising a plurality of battery cells (301) arranged in sequence along a same direction, wherein each of the plurality of battery cells (301) is provided with an electrical connection terminal (3011);
the harness isolation plate (100) of any one of claims 1 to 5, wherein the harness isolation plate (100) is located at a side of the battery cell group (300) where the electrical connection terminal (3011) is located; and
a plurality of electrical connection members (200) arranged side by side at two ends of the harness isolation plate (100) along the width direction (*Y*), wherein the plurality of electrical connection members (200) are electrically connected to the plurality of battery cells (301), and two electrical connection terminals (3011) of two adjacent battery cells (301) are electrically connected via the electrical connection member (200) on the harness isolation plate (100).

7. The battery module of claim 6, wherein each isolation sub-plate (10) of the harness isolation plate (100) is provided with at least two electrical connection members (200), and the at least two electrical connection members (200) are respectively disposed at two ends of the isolation sub-plate (10) along the width direction (*Y*).

## Patentansprüche

1. Kabelbaum-Isolierplatte (100), wobei die Kabelbaum-Isolierplatte (100) eine Längsrichtung *(X)* und eine Breitenrichtung *(Y)* aufweist und umfasst:
eine Vielzahl von in Längsrichtung (X) nacheinander angeordneten Isolierteilplatten (10),; wobei
die Kabelbaum-Isolierplatte (100) eine erste Isolierteilplatte (11), mindestens eine zweite Isolierteilplatte (13) und eine dritte Isolierteilplatte (15) umfasst, die nacheinander entlang der Längsrichtung (*X*) angeordnet sind, wobei entlang einer Höhenrichtung (*X*) der Kabelbaum-Isolierplatte (100) ein Vorsprung der ersten Isolierteilplatte (11) und ein Vorsprung der dritten Isolierteilplatte (15) beide L-förmig sind, und eine Vorsprungform der zweiten Isolierteilplatte (13) Z-förmig ist;
die mindestens eine zweite Isolierteilplatte (13) an einem Ende entlang der Längsrichtung (*X*) mit einer Fügeanordnung (40) und an einem anderen Ende entlang der Längsrichtung (*X*) mit einer Positionieranordnung (20) bereitgestellt ist;
die erste Isolierteilplatte (11) mit einer Positionieranordnung (20) bereitgestellt ist, die der Fügeanordnung (40) der zweiten Isolierteilplatte (13) an einem Ende entlang der Längsrichtung (*X*) entspricht; und
die dritte Isolierteilplatte (15) an einem Ende entlang der Längsrichtung (*X*) mit einer Fügeanordnung (40) bereitgestellt ist, die der Positionieranordnung (20) der zweiten Isolierteilplatte (13) entspricht; die Positionieranordnung (20) einen ersten Führungsabschnitt (21a), einen ersten Schnappverschlussabschnitt (23) und einen zweiten Führungsabschnitt (21b), die nacheinander in Intervallen entlang der Breitenrichtung (*Y*) angeordnet sind, umfasst, und die Fügeanordnung (40) einen ersten Fügeabschnitt (41a), einen ersten Eingriffabschnitt (43) und einen zweiten Fügeabschnitt (41b), die nacheinander in Intervallen entlang der Breitenrichtung (*Y*) angeordnet sind, umfasst; der erste Führungsabschnitt (21a) zusammenpassend mit dem ersten Fügeabschnitt (41a) verbunden ist, der erste Schnappverschlussabschnitt (23) mit dem ersten Eingriffabschnitt (43) verbunden ist und der zweite Führungsabschnitt (21b) mit dem zweiten Fügeabschnitt (41b) verbunden ist; **dadurch gekennzeichnet, dass**
eine Erstreckungslänge des ersten Führungsabschnitts (21a) entlang der Längsrichtung (*X*) und eine Erstreckungslänge des zweiten Führungsabschnitts (21b) entlang der Längsrichtung (*X*) beide größer sind als eine Erstreckungslänge des ersten Schnappverschlussabschnitts (23) entlang der Längsrichtung (*X*); die Erstreckungslänge des ersten Führungsabschnitts (21a) entlang der Längsrichtung (*X*) nicht gleich der Erstreckungslänge des zweiten Führungsabschnitts (21b) entlang der Längsrichtung (*X*) ist; der erste Schnappverschlussabschnitt (23) einen Haken (231) umfasst, der erste Eingriffabschnitt (43) eine Blende (431), einen Aufnahmehohlraum (433), eine erste Öffnung (435) und eine zweite Öffnung (437) umfasst, die erste Öffnung (435) und die zweite Öffnung (437) beide in Verbindung mit dem Aufnahmehohlraum (433) stehen und der Haken (231) in der zweiten Öffnung (437) entlang der Längsrichtung *(X)* beweglich ist.

2. Kabelbaum-Isolierplatte nach Anspruch 1, wobei die erste Öffnung (435) an einer Seite der Blende (431) entlang der Längsrichtung (*X* ) definiert ist, die zweite Öffnung (437) an einer anderen Seite der Blende (431) entlang der Längsrichtung (*X* ) definiert ist, der Haken (231) von der ersten Öffnung (435) in den Aufnahmehohlraum (433) eingeführt ist und sich mindestens teilweise aus der zweiten Öffnung (437) erstreckt, und die Blende (431) konfiguriert ist, um zu verhindern, dass sich der Haken (231) aus dem Aufnahmehohlraum (433) löst.

3. Kabelbaum-Isolierplatte nach Anspruch 1 oder 2, wobei der Haken (231) in der zweiten Öffnung (437) in einem Abstandsbereich von [0,20 mm, 1,00 mm] beweglich ist.

4. Kabelbaum-Isolierplatte nach Anspruch 3, wobei der erste Fügeabschnitt (41a) und der zweite Fügeabschnitt (41b) jeweils einen Aufnahmehohlraum (411) und eine dritte Öffnung (413) definieren, die miteinander in Verbindung stehen, die dritte Öffnung (413) an einer Seite des Aufnahmehohlraums (411) entlang der Längsrichtung (*X* ) definiert ist, der erste Führungsabschnitt (21a) einen gefasten Riegelabschnitt (211) an einem von der Isolierteilplatte (10) entfernten Ende aufweist, der zweite Führungsabschnitt (21b) einen gefasten Riegelabschnitt (211) an einem Ende von der Isolierteilplatte (10) weg aufweist, der gefaste Riegelabschnitt (211) des ersten Führungsabschnitts (21a) von der dritten Öffnung (413) des ersten Fügeabschnitts (41a) in den Aufnahmehohlraum (411) des ersten Fügeabschnitt (41a) eingeführt ist und der gefaste Riegelabschnitt (211) des zweiten Führungsabschnitts (21b) von der dritten Öffnung (413) des zweiten Fügeabschnitts (41b) in den Aufnahmehohlraum (411) des zweiten Fügeabschnitts (41b) eingeführt ist.

5. Kabelbaum-Isolierplatte nach Anspruch 4, wobei der gefaste Riegelabschnitt (211) in der dritten Öffnung (413) entlang der Längsrichtung (X) in einem Abstandsbereich von [0,2 mm, 1,0 mm] beweglich ist.

6. Batteriemodul (1000), umfassend:
eine Batteriezellengruppe (300), die eine Vielzahl von Batteriezellen (301) umfasst, die nacheinander entlang einer gleichen Richtung angeordnet sind, wobei jede der Vielzahl von Batteriezellen (301) mit einem elektrischen Verbindungsanschluss (3011) bereitgestellt ist;
die Kabelbaum-Isolierplatte (100) nach einem der Ansprüche 1 bis 5, wobei sich die Kabelbaum-Isolierplatte (100) an einer Seite der Batteriezellengruppe (300) befindet, an der sich der elektrische Verbindungsanschluss (3011) befindet; und
eine Vielzahl von nebeneinander an zwei Enden der Kabelbaum-Isolierplatte (100) entlang der Breitenrichtung (Y) angeordneten elektrischen Verbindungselementen (200), wobei die Vielzahl von elektrischen Verbindungselementen (200) elektrisch mit der Vielzahl von Batteriezellen (301) verbunden sind, und zwei elektrische Verbindungsanschlüsse (3011) zweier benachbarter Batteriezellen (301) über das elektrische Verbindungselement (200) an der Kabelbaum-Isolierplatte (100) elektrisch verbunden sind.

7. Batteriemodul nach Anspruch 6, wobei jede Isolierteilplatte (10) der Kabelbaum-Isolierplatte (100) mit mindestens zwei elektrischen Verbindungselementen (200) bereitgestellt ist und die mindestens zwei elektrischen Verbindungselemente (200) jeweils an zwei Enden der Isolierteilplatte (10) entlang der Breitenrichtung (*Y*) angeordnet sind.

## Revendications

1. Plaque d'isolation de faisceau (100), la plaque d'isolation de faisceau (100) ayant une direction de longueur (*X*) et une direction de largeur (*Y*) et comportant :
une pluralité de sous-plaques d'isolation (10) agencées en séquence selon la direction de longueur (*X*) ; dans laquelle
la plaque d'isolation de faisceau (100) comporte une première sous-plaque d'isolation (11), au moins une deuxième sous-plaque d'isolation (13), et une troisième sous-plaque d'isolation (15) agencées en séquence selon la direction de longueur (*X*), dans laquelle, le long d'une direction de hauteur (*X*) de la plaque d'isolation de faisceau (100), une projection de la première sous-plaque d'isolation (11) et une projection de la troisième sous-plaque d'isolation (15) sont toutes deux en forme de L, et une forme de projection de la deuxième sous-plaque d'isolation (13) est en forme de Z ;
l'au moins une deuxième sous-plaque d'isolation (13) est munie d'un ensemble d'accouplement (40) à une extrémité le long de la direction de longueur (*X*) et d'un ensemble de positionnement (20) à l'autre extrémité le long de la direction de longueur (*X*) *;*
la première sous-plaque d'isolation (11) est munie d'un ensemble de positionnement (20) correspondant à l'ensemble d'accouplement (40) de la deuxième sous-plaque d'isolation (13) à une extrémité le long de la direction de longueur (*X*) ; et
la troisième sous-plaque d'isolation (15) est munie d'un ensemble d'accouplement (40) correspondant à l'ensemble de positionnement (20) de la deuxième sous-plaque d'isolation (13) à une extrémité le long de la direction de longueur (*X*) ; l'ensemble de positionnement (20) comporte une première partie de guidage (21a), une première partie à encliquetage (23), et une deuxième partie de guidage (21b) agencées en séquence à intervalles le long de la direction de largeur (*Y*), et l'ensemble d'accouplement (40) comporte une première partie d'accouplement (41a), une première partie de mise en prise (43), et une deuxième partie d'accouplement (41b) agencées en séquence à intervalles le long de la direction de largeur (*Y*) ; la première partie de guidage (21a) est reliée par accouplement à la première partie d'accouplement (41a), la première partie à encliquetage (23) est reliée par accouplement à la première partie de mise en prise (43), et la deuxième partie de guidage (21b) est reliée par accouplement à la deuxième partie d'accouplement (41b) ; **caractérisée en ce que**
une longueur d'extension de la première partie de guidage (21a) le long de la direction de longueur (*X*) et une longueur d'extension de la deuxième partie de guidage (21b) le long de la direction de longueur (*X*) sont toutes deux supérieures à une longueur d'extension de la première partie à encliquetage (23) le long de la direction de longueur (*X*) ; la longueur d'extension de la première partie de guidage (21a) le long de la direction de longueur (*X*) n'est pas égale à la longueur d'extension de la deuxième partie de guidage (21b) le long de la direction de longueur (*X*) ; la première partie à encliquetage (23) comporte un crochet (231), la première partie de mise en prise (43) comporte un déflecteur (431), une cavité d'accueil (433), une première ouverture (435) et une deuxième ouverture (437), la première ouverture (435) et la deuxième ouverture (437) communiquent toutes deux avec la cavité d'accueil (433), et le crochet (231) est mobile dans la deuxième ouverture (437) le long de la direction de longueur (X).

2. Plaque d'isolation de faisceau selon la revendication 1, dans laquelle la première ouverture (435) est définie au niveau d'un côté du déflecteur (431) le long de la direction de longueur (*X*), la deuxième ouverture (437) est définie au niveau de l'autre côté du déflecteur (431) le long de la direction de longueur (*X*), le crochet (231) est inséré dans la cavité d'accueil (433) depuis la première ouverture (435) et s'étend au moins partiellement hors de la deuxième ouverture (437), et le déflecteur (431) est configuré pour empêcher le crochet (231) de se désolidariser de la cavité d'accueil (433).

3. Plaque d'isolation de faisceau selon la revendication 1 ou 2, dans laquelle le crochet (231) est mobile dans la deuxième ouverture (437) dans une plage de distance de [0,20 mm, 1,00 mm].

4. Plaque d'isolation de faisceau selon la revendication 3, dans laquelle la première partie d'accouplement (41a) et la deuxième partie d'accouplement (41b) définissent chacune une cavité de réception (411) et une troisième ouverture (413) qui communiquent entre elles, la troisième ouverture (413) étant définie au niveau d'un côté de la cavité de réception (411) le long de la direction de longueur (*X*), la première partie de guidage (21a) possède une partie de verrouillage chanfreinée (211) à une extrémité éloignée de la sous-plaque d'isolation (10), la deuxième partie de guidage (21b) possède une partie de verrouillage chanfreinée (211) à une extrémité éloignée de la sous-plaque d'isolation (10), la partie de verrouillage chanfreinée (211) de la première partie de guidage (21a) est insérée dans la cavité de réception (411) de la première partie d'accouplement (41a) depuis la troisième ouverture (413) de la première partie d'accouplement (41a), et la partie de verrouillage chanfreinée (211) de la deuxième partie de guidage (21b) est insérée dans la cavité de réception (411) de la deuxième partie d'accouplement (41b) depuis la troisième ouverture (413) de la deuxième partie d'accouplement (41b).

5. Plaque d'isolation de faisceau selon la revendication 4, dans laquelle la partie de verrouillage chanfreinée (211) est mobile dans la troisième ouverture (413) le long de la direction de longueur (X) dans une plage de distance de [0,2 mm, 1,0 mm].

6. Module de batterie (1000), comportant :
un groupe d'éléments de batterie (300) comprenant une pluralité d'éléments de batterie (301) agencés en séquence le long d'une même direction, dans lequel chacun de la pluralité d'éléments de batterie (301) est pourvu d'une borne de connexion électrique (3011) ;
la plaque d'isolation de faisceau (100) selon l'une quelconque des revendications 1 à 5, dans lequel la plaque d'isolation de faisceau (100) est située au niveau d'un côté du groupe d'éléments de batterie (300) où la borne de connexion électrique (3011) est située ; et
une pluralité d'éléments de connexion électrique (200) agencés côte à côte aux deux extrémités de la plaque d'isolation de faisceau (100) selon la direction de largeur (Y), ladite pluralité d'éléments de connexion électrique (200) étant électriquement connectée à la pluralité d'éléments de batterie (301), et deux bornes de connexion électrique (3011) de deux éléments de batterie (301) adjacents étant électriquement connectées par l'intermédiaire de l'élément de connexion électrique (200) sur la plaque d'isolation de faisceau (100).

7. Module de batterie selon la revendication 6, dans lequel chaque sous-plaque d'isolation (10) de la plaque d'isolation de faisceau (100) est munie d'au moins deux éléments de connexion électrique (200), et les au moins deux éléments de connexion électrique (200) sont respectivement disposés aux deux extrémités de la sous-plaque d'isolation (10) le long de la direction de largeur (Y).
